**Europäisches Patentamt**

**European Patent Office**

**Office européen des brevets**

(11) Veröffentlichungsnummer: **0 232 834 B1**

(12) **EUROPÄISCHE PATENTSCHRIFT**

(45) Veröffentlichungstag der Patentschrift:
02.01.91 Patentblatt 91/01

(51) Int. Cl.⁵: **H02K 1/28**

(21) Anmeldenummer: **87101443.7**

(22) Anmeldetag: **03.02.87**

(54) **Mehrpoliger Gleichstrommotor.**

(30) Priorität: **11.02.86 DE 3604245**

(43) Veröffentlichungstag der Anmeldung:
**19.08.87 Patentblatt 87/34**

(45) Bekanntmachung des Hinweises auf die
Patenterteilung:
**02.01.91 Patentblatt 91/01**

(84) Benannte Vertragsstaaten:
**AT BE CH DE ES FR GB GR IT LI LU NL SE**

(56) Entgegenhaltungen:
**EP-A- 0 106 383
DE-A- 2 641 536
FR-A- 2 559 318
US-A- 4 442 367**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **Uhde, Dietmar, Dipl.-Ing.
Weiherstrasse 11
D-7744 Königsfeld (DE)**
Erfinder: **Gleim, Günter, Dipl.-Ing.
Oberer Sonnenbühl 22
D-7730 Villingen 22 (DE)**
Erfinder: **Schandl, Hartmut, Dipl.-Ing.
Egerstrasse 2
D-7730 Villingen (DE)**
Erfinder: **Hoch, Peter, Dipl.-Ing.
Bergstrasse 56
D-7740 Triberg (DE)**
Erfinder: **Lehmann, Rüdiger
Haldenweg 42
D-7742 St. Georgen (DE)**

(74) Vertreter: **Einsel, Robert, Dipl.-Ing.
Deutsche Thomson-Brandt GmbH Patent- und
Lizenzabteilung Göttinger Chaussee 76
D-3000 Hannover 91 (DE)**

# Beschreibung

Die Erfindung betrifft einen Mehrpoligen Gleichstrommotor, insbesondere einen elektronisch kommutierten Gleichstrommotor mit einem axialen oder radialen Luftspalt. Solche Motore werden für den Antrieb bei Plattenspielern, Tonbandgeräten und Videorecordern benötigt.

Bei der Aufzeichnung oder Wiedergabe von Signalen hat es sich als störend erwiesen, daß bei Polwechseln Stöße auftreten und auf die Motorwelle übertragen werden. Zur Verminderung der Auswirkung solcher Stöße werden zusätzliche Mittel für ihren Ausgleich im Antriebssystem benötigt. Aus den vorveröffentlichten Patentanmeldungen EP-A-0106383 sowie FR-A-2559318 ist es bekannt, zwischen der antreibenden Motorwelle nebst Rotorteilen und den im Rotor angebrachten Magneten und deren Befestigungsteile zwecks Schwingungsabsorbierung zusätzlich Gummiteile einzufügen, durch die eine direkte Kontaktierung zwischen der Motorwelle und den Magneten unterbunden wird. Der Erfindung liegt die Aufgabe zugrunde, einen Motor zu schaffen, der keine zusätzlichen Mittel im Antriebssystem erfordert. Diese Aufgabe wird durch die im Anspruch 1 beschriebenen Merkmale gelöst. Weiterbildungen der Erfindung sind in den Unteransprüchen beschrieben.

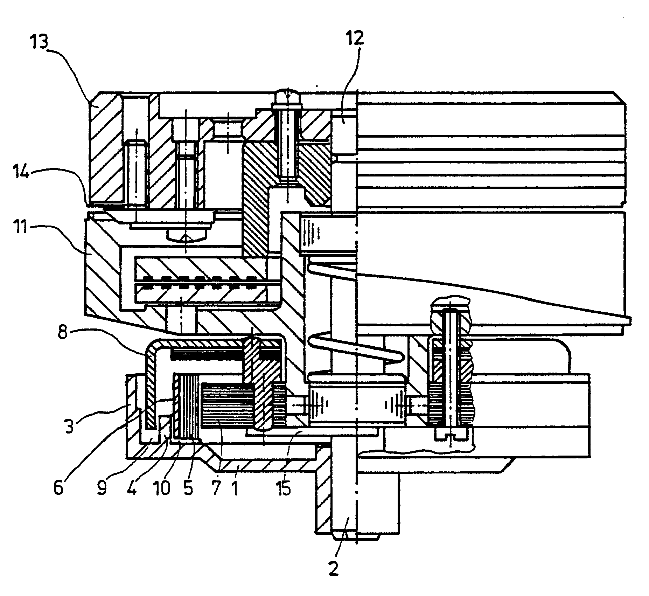

Zur näheren Erläuterung der Erfindung wird im folgenden ein Ausführungsbeispiel anhand der Zeichnung beschrieben.

Die Zeichnung zeigt einen Gleichstrommotor mit einem nichtmagnetischen Rotorteil 1, das auf einer Welle 2 befestigt ist und das durch eine Außenwandung 3 eine topfförmige Ausbildung hat. An der Innenwandung des Rotorteils 1 ist ein insbesondere ringförmiger Vorsprung 4 angeordnet, an dem ein Permanentmagnetring 5 direkt oder über einen ebenfalls ringförmigen Rückschlußteil 6 befestigt ist. Der Permanentmagnetring 5 enthält mehrere Magnetpole, die mit Spulen auf einem Stator 7 zusammenwirken. Die Statorspulen sind ortsfest gelagert und mit einem Abschirmbecher 8 verbunden, der in einen Spalt 9 zwischen Außenwandung 3 und Vorsprung 4 des Rotorteils 1 eingreift. Bei der Drehung des Motors werden auf die Permanentmagnete infolge des Polwechsels Stöße ausgeübt, so daß der Lauf des Rotors nicht gleichmäßig ist. Der Lauf des Rotors 1, 5 wird dadurch gleichmäßig gestaltet, daß der Permanentmagnetring 5 oder das Rückschlußteil 6 nachgiebig mit dem Vorsprung 4 verbunden sind. Zu diesem Zweck ist die Verbindung 10 zwischen den Teilen 4,5,6 nachgiebig ausgebildet, z.B. durch einen nachgiebig bleibenden Kleber.

Statt eines Klebers kann auch ein nachgiebiges Zwischenmaterial vorgesehen sein, das die störenden impulsförmigen Umfangsgeschwindigkeitsänderungen (Polfühligkeit) im Arbeitsdrehzahlbereich optimal dämpft. Auf diese Weise gelangen die beschriebenen Stöße praktisch nicht an die Motorwelle.

Der soweit beschriebene Motor ist Teil einer Kopftrommel für einen Videorecorder. Die Welle 2 ist in einem ortsfesten Teil, nämlich der ortsfesten Trommel 11 der Kopftrommelanordnung befestigt und trägt an ihrem unteren Ende das Rotorteil 1 und an ihrem oberen Ende 12 die rotierende Trommel 13 der Kopftrommeleinheit mit den Köpfen 14. Da die Stöße von der Rotorwelle 2 ferngehalten werden, weist auch die rotierende Kopftrommel 13 mit den Videoköpfen 14 einen stoßfreien Lauf auf. Der Stator des Elektromotors kann über ein Erdungsblech 15 mit der Welle 2 verbunden sein und elektrostatische Aufladungen der rotierenden Teile ableiten.

Bei einem Gleichstrommotor mit stationären Permanentmagneten werden die Spulen im Rotor nachgiebig gelagert.

# Ansprüche

1. Mehrpoliger Gleichstrommotor, bei dem der Rotor (1) ringförmig angeordnete Permanentmagnete (5) mit mehreren Polen aufweist, deren Feldlinien über einen Luftspalt mit kommutierbaren Statorspulen (7) zusammenwirken, mit einer Einrichtung (10) zur Schwingungsabsorbierung zwischen Motorwelle (2) und der im Rotor (1) angeordneten Permanentmagnete (5), **dadurch gekennzeichnet,** daß der Rotor (1) topfförmig ausgebildet ist und an der Innenseite des Topfes einen Vorsprung (4) aufweist, an dem die Permanentmagnete (5) durch einen nachgiebig ausgebildeten Kleber (10) so befestigt sind, daß die Übertragung von Stößen aufgrund von Polwechseln auf die Rotorwelle (2) vermindert wird.

2. Motor nach Anspruch 1, **dadurch gekennzeichnet,** daß die Permanentmagnete (5) einen Permanentmagnetring bilden.

3. Motor nach Anspruch 2, **dadurch gekennzeichnet,** daß der Permanentmagnetring (5) auf einem ferromagnetischen Rückschluß (6) befestigt ist.

4. Motor nach Anspruch 1, **dadurch gekennzeichnet,** daß der Vorsprung (4) von einer Außenwandung (3) des Rotors (1) umgeben ist, und daß in den Spalt (9) zwischen Vorsprung (4) und Außenwandung (3) ein stationärer zylindrischer Abschirmteil (8) hineinragt.

# Claims

1. A multi-pole d.c. motor, in which the rotor (1) has annularly arranged permanent magnets (5) with several poles, the field lines of which cooperate via an air gap with commutatable stator coils (7), with a device (10) for absorbing resonance between the motor shaft (2) and the permanent magnets (5) which are arranged in the rotor (1), **characterised in that** the rotor (1) is pot-shaped and on the inside of the pot has a projection (4), to which the permanent magnets (5) are fixed by a resilient adhesive (10), so that the transmission of surges to the rotor shaft (2) due to changes in poles is minimised.

2. A motor according to claim 1, **characterised in that** the permanent magnets (5) form a permanent magnet ring.

3. A motor according to claim 2, **characterised in that** the permanent magnet ring (5) is fixed to a ferromagnetic return (6).

4. A motor according to claim 1, **characterised in that** the projection (4) is surrounded by an outer wall (3) of the rotor (1) and that a stationary cylindrical shielding part (8) projects into the gap (9) between the projection (4) and the outer wall (3).

## Revendications

1. Moteur à courant continu multipolaire dans lequel le rotor (1) présente des aimants permanents (5) à plusieurs pôles disposés en forme d'anneau dont les lignes de champ coopèrent, par l'intermédiaire d'un entrefer, avec des bobines de stator (7) pouvant être commutées, avec un dispositif d'absorption des vibrations entre l'arbre du moteur (2) et les aimants permanents (5) disposés dans le rotor (1), **caractérisé en ce que** le rotor (1) est configuré en forme de pot et qu'il présente, sur la face intérieure du pot, une saillie (4) sur laquelle les aimants permanents (5) sont fixés par une colle (10) configurée de manière flexible de telle manière que la transmission à l'arbre du rotor (2) des chocs dûs aux alternances est réduite.

2. Moteur selon la revendication 1, **caractérisé en ce que** les aimants permanents (5) forment un anneau d'aimants permanents.

3. Moteur selon la revendication 2, **caractérisé en ce que** l'anneau d'aimants permanents (5) est fixé à un élément de refermeture ferromagnétique (6).

4. Moteur selon la revendication 1, **caractérisé en ce que** la saillie (4) est entourée par une paroi extérieure (3) du rotor (1) et qu'une pièce de blindage (8) cylindrique fixe fait saillie dans la fente (9) entre la saillie (4) et la paroi extérieure (3).